# EUROPEAN PATENT SPECIFICATION

(11) **EP 2 167 723 B1**
(45) Date of publication and mention of the grant of the patent: **05.06.2013**
(21) Application number: 08778734.7
(22) Date of filing: 11.07.2008
(51) Int. Cl.: D06H 7/10, D06H 7/00, B26F 1/00, B26D 5/00, B26F 1/44, G02B 5/30, B26D 5/20, B26F 1/40

(54) **PROCESS FOR PREPARING RECTANGULAR PIECES AT HIGH CUTTING EFFICIENCY**
VERFAHREN ZUR HERSTELLUNG RECHTECKIGER STÜCKE MIT HOHER SCHNEIDEFFIZIENZ
PROCÉDÉ DE PRÉPARATION DE PIÈCES RECTANGULAIRES À HAUTE EFFICACITÉ DE DÉCOUPE

(30) Priority: 16.07.2007 KR 20070071398
(43) Date of publication of application: 31.03.2010
(73) Proprietor: LG CHEM, LTD., Seoul 150-721 (KR)
(72) Inventor: LEE, Hokyung, Daejeon 305-761 (KR); CHOI, Jaein, Daejeon 305-761 (KR); HEO, SOONKI, Daejeon 305-761 (KR); LEE, Jongku, Daejeon 305-370 (KR)
(74) Representative: HOFFMANN EITLE
(86) International application number: PCT/KR2008/004075
(87) International publication number: WO 2009/011518

(56) References cited:
- EP-A1- 0 384 914
- WO-A1-2004/041489
- WO-A1-2004/102430
- DE-A1- 3 135 021
- JP-A- 2000 008 272
- JP-A- 2006 150 916
- KR-A- 20040 027 787
- KR-B1- 100 712 829
- US-A- 2 489 583
- US-A- 3 464 293
- US-A- 4 043 234
- US-A- 4 144 783
- US-A- 4 554 635

## Description

### FIELD OF THE INVENTION

The present invention relates to a method of manufacturing one or more kinds of rectangular unit pieces from a long base material sheet at a predetermined angle through a continuous cutting process using a cutting frame, and, more particularly, to a method of manufacturing rectangular unit pieces, including the steps of manufacturing a base material sheet of a laminate structure, continuously feeding the base material sheet, cutting the base material sheet using a cutting frame under a predetermined condition, and winding a scrap produced after the cutting the base material sheet, whereby it is possible to manufacture the rectangular unit pieces at high cutting efficiency.

### BACKGROUND OF THE INVENTION

KR 10-0712829 B1 describes a cutting die comprising a plurality of cutter blades for cutting rectangular pieces from a base material at a predetermined inclination.

EP 0 384 914 A1 relates to a cutting device for cutting blanks from a long base material sheet. The base material, e.g. pre-pegs, may be covered on the top and on the bottom with a foil. During manufacturing of the blanks, the base material, which is wound on a dispensing roll, is continuously fed to a conveyor and is cut on a cutting table.

US 2,489,583 A describes a method of cutting blanks with a plurality of die cutting elements from thin sheet or strip material. The sheet material is successively fed by intervals equal to a potential cutting space of the total number of dies in the line in the direction of the alignment of the dies for successive cutting operations.

Moreover, steel rule cutting dies are described in W02004/041489 A1 and US 3,464,293 A.

A technology for cutting a long base material sheet to manufacture a plurality of rectangular unit pieces having a relatively small size has been adopted in various fields. For example, a base material sheet having a specific width and a long length is repeatedly cut by a cutting frame to simultaneously manufacture a plurality of rectangular unit pieces though a one-time cutting process.

Meanwhile, the size (width) of the base material sheet is specified, whereas the size of the rectangular unit pieces may vary as needed, due to various factors, such as the limitation of base material sheet suppliers, the efficiency aspect of the manufacturing process, the fluctuation in demand of rectangular unit pieces, etc. At this time, the cutting efficiency greatly varies depending upon how the cutting process is carried out. The low cutting efficiency increases the amount of a scrap, produced from the base material sheet, which will be disposed of after the cutting process, with the result that eventually, the manufacturing costs of the rectangular unit pieces increase.

When the size (width and length) of a base material sheet is in constant proportion to the size (length and width) of specific rectangular unit pieces, it is possible to minimize the cutting loss by sequentially arranging the rectangular unit pieces such that the rectangular unit pieces are brought into contact with one another at positions having such constant proportion. However, when such constant proportion is not formed, the cutting loss may vary depending upon the array structure of the rectangular unit pieces. Furthermore, when the rectangular unit pieces are to be cut at a predetermined angle to the longitudinal direction of the base material sheet, a large amount of a scrap is inevitably produced.

Consequently, when cutting a plurality of rectangular unit pieces based on the size of a base material sheet, a method of increasing the cutting rate of the base material sheet is very important in the aspect related to the manufacturing costs of the rectangular unit pieces.

The cutting rate of the base material sheet may vary typically depending upon the condition of the cutting process, the structure of the cutting frame, etc. That is, it is possible to achieve high cutting efficiency through the working condition to maximize the utilization of the base material sheet in the cutting process, the array structure in which cutters for cutting the rectangular unit pieces are optimally arranged on the base material sheet, etc.

In order to cut the rectangular unit pieces from the base material sheet at a predetermined angle, there is generally used an array structure in which the cutters (for example, knives) are arranged on the cutting frame such that the rectangular unit pieces corresponding to the cutters are adjacent to one another.

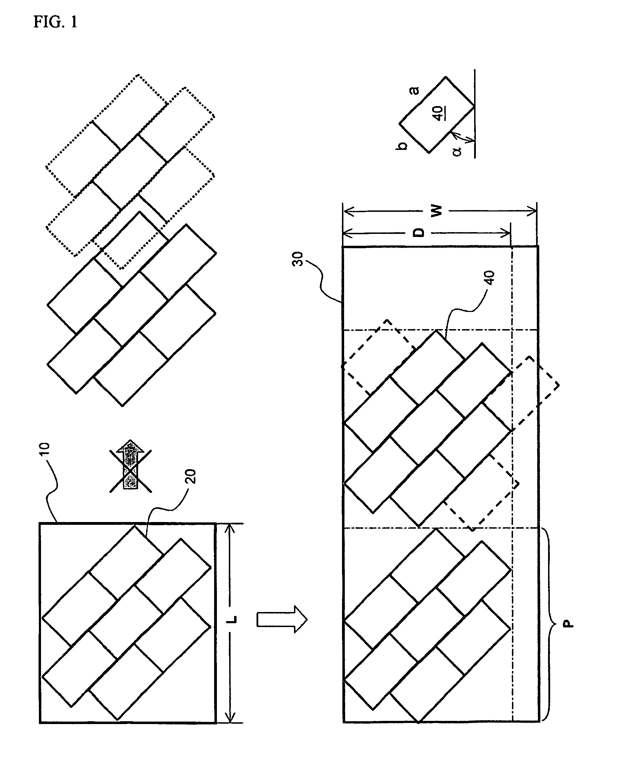

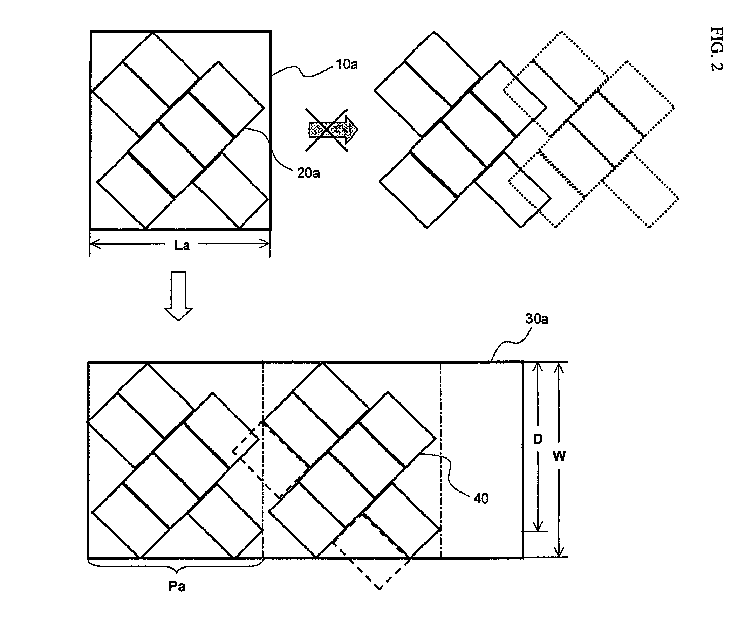

In connection with this matter, FIGS. 1 and 2 typically illustrate the shape of cutters of conventional cutting frames and a process for cutting a base material sheet using the respective cutting frames. For convenience of description, the base material sheet is illustrated to have a predetermined length.

A cutting frame 10; 10a includes a plurality of cutters 20; 20a formed in the shape of a rectangular unit piece. The cutters 20; 20a are arranged in a predetermined pattern. The cutters 20; 20a sequentially cut a base material sheet 30; 30a having a predetermined width and a long length to manufacture rectangular unit pieces 40 corresponding to the shape of the cutters 20; 20a.

The cutters 20; 20a are inclined at an angle of approximately 45 degrees, and therefore, the rectangular unit pieces 40 are cut from the base material sheet 30; 30a at an angle of approximately 45 degrees.

The cutting process is carried out to sequentially cut the base material sheet 30; 30a, moving in one direction, by the cutting frame 10; 10a. On the assumption that the length of the base material sheet 30; 30a cut during a one-time cutting process is a pitch P, the pitch P; Pa is almost equal to the length L; La of the cutting frame 10; 10a in FIGS. 1 and 2 (P=L, Pa=La).

It is naturally required for the cutters 20; 20a to be arranged such that the cutters 20; 20a are located between the cutting frame 10; 10a and the base material sheet 30; 30a. For this reason, it is not possible to cut rectangular unit pieces (shown by dotted lines) deviating from the cutting frame 10; 10a or the base material sheet 30; 30a.

The cutters 20; 20a are mounted or formed in the cutting frame 10; 10a such that the cutters 20; 20a can cut a predetermined number (seven in FIGS. 1 and 2) of the rectangular unit pieces 40 through a one-time cutting process. The shape of the cutters 20; 20a is substantially identical to the array structure of the rectangular unit pieces 40 on the base material sheet 30; 30a.

Each rectangular unit piece 40 is constructed in a rectangular structure in which a longitudinal side a of each rectangular unit piece 40 is longer than a lateral side b of each rectangular unit piece 40. Also, each rectangular unit piece 40 is inclined at an angle a of approximately 45 degrees to the longitudinal direction of the base material sheet 30; 30a. When the inclined rectangular unit pieces 40 are arranged on the base material sheet 30; 30a, it is possible to consider two array structures of the rectangular unit pieces as shown in FIGS. 1 and 2.

The first array structure of the rectangular unit pieces is to sequentially arrange the rectangular unit pieces 40 such that the lateral sides b of the respective rectangular unit pieces coincide with one another, as shown in FIG. 1.

In this array structure, only a cutting width D, not the effective width W, of the base material sheet 10 is substantially used, and therefore, the remaining width W-D is disposed of as a scrap. Since the rectangular unit pieces 40 are inclined at an angle of approximately 45 degrees, a scrap is also inevitably produced at the upper end region of the base material sheet.

The second array structure of the rectangular unit pieces is to sequentially arrange the rectangular unit pieces 40 such that the longitudinal sides a of the respective rectangular unit pieces coincide with one another, as shown in FIG. 2.

In comparison between the structures of FIGS. 1 and 2, a total of 14 rectangular unit pieces 40 are produced through a total of two cutting processes; however, the lengths of the base material sheets 30; 30a used are different from each other. That is, the length La of the base material sheet used in the array structure of the rectangular unit pieces shown in FIG. 2 is less than the length L of the base material sheet used in the array structure of the rectangular unit pieces shown in FIG. 1. Consequently, the cutting efficiency of the array structure of the rectangular unit pieces shown in FIG. 2 is higher by the difference.

Also, in the array structures of the rectangular unit pieces shown in FIGS. 1 and 2, the pitch P; Pa is almost equal to the length L; La of the cutting frame 10; 10a (P=L, Pa=La), and a large number of residue regions are generated in spaces between the respective pitches, with the result that the cutting loss is higher by the difference.

In consideration of the above description, it can be seen that the cutting efficiency may vary according to the array structure of the rectangular unit pieces. However, when the rectangular unit pieces are inclined at a specific angle to the base material sheet, it is not easy to variously arrange the rectangular unit pieces. For this reason, only the array structure of the rectangular unit pieces in a structure in which specific sides (longitudinal sides or lateral sides) of the rectangular unit pieces coincided with one another as shown in FIG. 1 or 2 is mainly considered in the conventional art.

Furthermore, when two or more kinds of rectangular unit pieces having different sizes are to be cut from the same base material sheet, the array structure of the rectangular unit pieces is very complicated. For this reason, consideration is given to only the array structure of the rectangular unit pieces in a structure in which specific sides of the rectangular unit pieces coincide with one another or central axes of the rectangular unit pieces coincide with one another.

Consequently, when an array structure of the rectangular unit pieces exhibiting higher cutting efficiency than that of the array structures of the rectangular unit pieces as shown in FIGS. 1 and 2 and a manufacturing method based on such an array structure are provided, it is possible to lower the cutting loss and eventually reducing the manufacturing costs of products. The improvement of the cutting efficiency is more and more serious especially when the price of the base material sheet is high and/or the rectangular unit pieces are to be manufactured on a large scale.

### SUMMARY OF THE INVENTION

Aspects of the present invention are defined in claims 1 and 10 below. The dependent claims are directed to optional and preferred features.

Therefore, the present invention has been made to solve the above problems, and other technical problems that have yet to be resolved.

As a result of a variety of extensive and intensive studies and experiments on a cutting frame, the inventors of the present invention have found that, when a cutting process is carried out based on a specific working condition and a specific array structure of rectangular unit pieces, which will be described hereinafter in detail, the cutting efficiency is greatly improved as compared to the conventional art, and the continuity of the working process is excellently achieved. The present invention has been completed based on these findings.

Specifically, it is an object of the present invention to provide a method of manufacturing rectangular unit pieces that is capable of exhibiting high cutting efficiency and excellent continuity of the working process through a specific working condition and a specific array structure of rectangular unit pieces.

It is another object of the present invention to provide an apparatus for manufacturing rectangular unit pieces that is capable of performing the method of manufacturing the rectangular unit pieces.

In accordance with one aspect of the present invention, the above and other objects can be accomplished by the provision of a method of manufacturing one or more kinds of rectangular unit pieces from a long base material sheet at a predetermined angle through a continuous cutting process using a cutting frame, the method including (a) manufacturing a base material sheet of a laminate structure having two or more stacked sheets and winding the base material sheet on a roll, (b) continuously feeding the base material sheet, wound on the roll, (c) cutting the fed base material sheet using a cutting frame having cutters mounted or formed therein in a structure in which the cutters correspond to rectangular unit pieces to be manufactured, the cutters being arranged such that the shapes of opposite side ends of the cutters coincide with each other when the cutters are successively arranged, the cutting being carried out while the base material sheet is partially overlapped such that a length ('pitch') for a one-time cutting process is equal to a spacing distance between the opposite side ends of the cutters in the longitudinal direction are equal to each other at arbitrary heights of the cutting frame, (d) winding a scrap, produced after the cutting of the rectangular unit pieces, on another roll, and (e) transferring the cut rectangular unit pieces.

Consequently, the manufacturing method according to the present invention is capable of performing a cutting process with a pitch less than the length of the cutting frame, thereby improving the cutting efficiency. Also, the manufacturing method according to the present invention is capable of continuously performing the cutting process through the above-defined processes, thereby reducing the manufacturing costs of the rectangular unit pieces.

As previously described, all the rectangular unit pieces are cut from the base material sheet while being inclined at a predetermined angle to the longitudinal direction of the base material sheet. The rectangular unit pieces may be cut while being inclined at the predetermined angle to the base material sheet, for example, when inherent physical properties of the base material sheet in the longitudinal direction or in the lateral direction must be expressed by a predetermined angle with respect to the rectangular unit pieces.

For example, at the step (a), the base material sheet may be a sheet including layers that absorb or transmit only a specific-direction wave motion of light or an electromagnetic wave in the longitudinal direction or in the lateral direction. Also, each of the rectangular unit pieces, cut from the base material sheet at the step (c), may be a relatively small-sized film of which the absorption or transmission layers are inclined at a predetermined angle.

The base material sheet may be, for example, a laminate sheet constructed in a structure in which a sheet, as a protective layer, is attached to at least one major surface of another sheet including an absorption or transmission layer. According to circumstances, in addition to the above-described layers, a further layer or sheet for improving the physical property or adding a function may be added.

The laminate sheet may be manufactured by coupling separately manufactured unit sheets by adhesive or thermal welding. According to circumstances, the laminate sheet may be manufactured by coextrusion.

The inclination angle may vary depending upon conditions of the base material sheet and the rectangular unit pieces manufactured from the base material sheet. For example, the inclination angle may be 20 to 70 degrees.

The base material sheet manufactured at the step (a) is wound on a predetermined roll, is fed such that a continuous working process is carried out with respect to the base material sheet (step (b)), and is then cut by the cutting frame at the step (c).

At the step (c), the kind of the cutters, formed or mounted in the cutting frame, is not particularly restricted so long as the cutters exhibit the structure or properties to cut the rectangular unit pieces from the base material sheet. Typically, each of the cutters may be a knife for cutting, such as a metal knife or a jet water knife, or a light source for cutting, such as laser.

The cutting process at the step (c) is characterized in that the cutting process is carried out in a partial overlapping fashion. To this end, the cutters are constructed in a structure in which, when the cutters are continuously arranged, the opposite side ends of the cutters coincide with each other, and a pitch for a one-time cutting process is set such to be equal to the spacing distance between the opposite side ends of the cutters arranged in the longitudinal direction at the arbitrary heights of the cutting frame.

Consequently, the pitch for the one-time cutting process is less than the length of the cutting frame, and the cutting frame performs a second cutting process while the base material sheet is moved with a pitch less than the length of the cutting frame after a first cutting process is completed, with the result that the cutting process is carried out while the base material sheet is overlapped by the distance obtained by subtracting the pitch from the length of the cutting frame.

Preferably, the distances between the opposite side ends of the cutters are equal to each other at the respective heights of the cutting frame, thereby minimizing the loss of the base material sheet in the longitudinal direction.

In the present invention, the array structure of the rectangular unit pieces substantially coincide with the cutters of the cutting frame or the array structure of the cutters. Consequently, it is interpreted that the array structure of the rectangular unit pieces means the cutters or the array structure of the cutters, so long as an additional description is not given.

In a preferred embodiment, the cutters are mounted or formed in the cutting frame based on the array structure of the rectangular unit pieces such that a large majority of the remaining rectangular unit pieces, excluding the uppermost row rectangular unit pieces and the lowermost row rectangular unit pieces, are arranged while being adjacent to different rectangular unit pieces at four sides of each rectangular unit piece, and at least some combinations of adjacent four rectangular unit pieces form an island-type residue in the center thereof.

The array structure of the rectangular unit pieces is a structure in which one side of one rectangular unit piece does not completely coincide with, but is somewhat offset from, the corresponding side of another rectangular unit piece. This array structure of the rectangular unit pieces is not the one that can be generally easily considered when the cutters are arranged on the base material to cut inclined rectangular unit pieces. However, it was confirmed that this unique array structure of the rectangular unit pieces provides higher cutting efficiency than the conventional cutting frame to our surprise.

The cutters of the cutting frame exhibits higher cutting efficiency than the conventional cutting frame by the unique array structure of the rectangular unit pieces as described above because the unit pieces are constructed in a rectangular structure, and the rectangular unit pieces are cut while being inclined at a predetermined angle to the longitudinal direction of the base material sheet.

The inventors of the present invention confirmed that, when the unit pieces are constructed in a square structure or the unit pieces are cut while not being inclined, the cutting efficiency is further improved by an array structure in which the unit pieces are arranged while being adjacent to one another such that the opposite sides coincide with one another. Consequently, the cutting frame according to the present invention is preferably used to cut the rectangular unit pieces while the rectangular unit pieces are inclined at a predetermined angle.

In the above description, the term 'uppermost row unit pieces' and the term 'lowermost row unit pieces' mean the rectangular unit pieces substantially located at the uppermost side and the lowermost side among a series of rectangular unit pieces arranged on the base material sheet. These rectangular unit pieces are characterized in that the rectangular unit pieces are commonly adjacent to different rectangular unit pieces only at first to third sides thereof.

On the other hand, a large majority of the remaining rectangular unit pieces, located between the uppermost row rectangular unit pieces and the lowermost row rectangular unit pieces, are arranged while being adjacent to different rectangular unit pieces at four sides of each rectangular unit piece, as previously defined. In the array structure of the rectangular unit pieces according to the conventional art, two sides of each rectangular unit piece, among four sides of each rectangular unit piece, are adjacent to two different rectangular unit pieces for each side, and the remaining two sides of each rectangular unit piece are adjacent to one different rectangular unit piece for each side. According to the conventional art, therefore, the number of different rectangular unit pieces to which one rectangular unit piece can be adjacent is five (see FIG. 2) or six (see FIG. 1).

In consideration of this matter, the array structure of the rectangular unit pieces according to the present invention is constructed in a structure in which the rectangular unit pieces are somewhat offset from one another such that each side of any arbitrary rectangular unit piece is adjacent to only one different rectangular unit piece. Consequently, at least some combinations of adjacent four rectangular unit pieces form an island-type residue in the center thereof. The 'island-type residue' means a residue having a relatively large size, produced by the offset array structure of the rectangular unit pieces as described above. This island-type residue is left on a scrap produced after cutting the base material sheet in a small rectangular shape.

In the above description, the structure in which a large majority of the remaining rectangular unit pieces, excluding the uppermost row rectangular unit pieces and the lowermost row rectangular unit pieces, are arranged while being adjacent to different rectangular unit pieces at four sides of each rectangular unit piece includes the structure in which some rectangular unit pieces are exceptionally adjacent to less than or greater than four rectangular unit pieces due to the variety of the array structure. However, a large majority of the rectangular unit pieces exhibit such regularity.

The number of the combinations of every adjacent four rectangular unit pieces forming the island-type residue is preferably not less than 50%, more preferably not less than 90%, of the number of the remaining rectangular unit pieces excluding the uppermost row rectangular unit pieces and the lowermost row rectangular unit pieces, although the number of the combinations of every adjacent four rectangular unit pieces may vary depending upon the kind and number of the rectangular unit pieces.

When one kind of the rectangular unit pieces are cut or when the size of the rectangular unit pieces is not in direct proportion although two or more kinds of the rectangular unit pieces are cut, island-type residues are substantially produced for most combinations of the rectangular unit pieces. The island-type residues may have the same size or different sizes.

Preferably, a cutting margin having a size less than that of the island-type residue is formed at regions where the rectangular unit pieces are adjacent to one another. The cutting frame independently cuts a plurality of small-sized rectangular unit pieces from a base material sheet through the use of the cutters. Consequently, when the rectangular unit pieces are in contact with one another, i.e., facing sides of the adjacent rectangular unit pieces are simultaneously formed by a single cutter, it is difficult to handle the rectangular unit pieces as independent unit pieces at a subsequent process following the cutting process. Consequently, it is more preferred to arrange the rectangular unit pieces such that a small cutting margin is provided between the respective rectangular unit pieces in consideration of the continuity of the process. However, the cutting margin has a size less than that of the island-type residue as previously described.

In the present invention, one kind of the rectangular unit pieces may be cut, or two or more kinds of the rectangular unit pieces may be cut. In the structure in which two or more kinds of the rectangular unit pieces are arranged, however, the above-described adjacency condition of the rectangular unit pieces and forming condition of the island-type residues are applicable.

At the step (d), the scrap, produced after the cutting of the rectangular unit pieces, is wound on, for example, a winding roll. When the cutting margin is provided between the respective rectangular unit pieces, the winding process is more easily carried out, which is preferred in the aspect of the working process.

The scrap at the step (d) shows an array structure of rectangular unit piece bores compositively reflecting the shape of the cutters of the cutting frame and the conditions of the cutting process.

In a preferred embodiment, the scrap includes a plurality of bores corresponding to the rectangular unit pieces continuously connected to one another by a cutting margin, a large majority of the remaining rectangular unit piece bores, excluding the uppermost row rectangular unit piece bores and the lowermost row rectangular unit piece bores, are arranged while being adjacent to different rectangular unit piece bores at four sides thereof by a gap corresponding to the cutting margin, and at least some combinations of adjacent four rectangular unit piece bores form an island-type residue having a size greater than that of the cutting margin in the center thereof.

At the step (e), the cut rectangular unit pieces may be moved to a predetermined position, for example, by a transfer unit, such as a conveyor, such that a subsequent process can be continuously carried out. Alternatively, the cut rectangular unit pieces may be appropriately stored for a future process.

In accordance with another aspect of the present invention, there is provided an apparatus for manufacturing rectangular unit pieces that is capable of performing the above-described manufacturing method.

Specifically, the present invention provides an apparatus for manufacturing one or more kinds of rectangular unit pieces from a long base material sheet at a predetermined angle through a continuous cutting process, the apparatus including (i) a device for stacking two or more sheets to manufacture a base material sheet of a laminate structure, (ii) a feed roll for feeding the base material sheet, (iii) a cutting frame including cutters mounted or formed therein based on the array structure of the rectangular unit pieces such that a large majority of the remaining rectangular unit pieces, excluding the uppermost row rectangular unit pieces and the lowermost row rectangular unit pieces, are arranged while being adjacent to different rectangular unit pieces at four sides of each rectangular unit piece, and at least some combinations of adjacent four rectangular unit pieces form an island-type residue in the center thereof, (iv) a winding roll for winding a scrap produced after the cutting of the rectangular unit pieces, and (v) a conveyor for transferring the cut rectangular unit pieces.

The details of the manufacturing apparatus, the rolls, the cutting frame, and the conveyor may be sufficiently understood from the previous description, the accompanying drawings, and the following description.

### BRIEF DESCRIPTION OF THE DRAWINGS

The above and other objects, features and other advantages of the present invention will be more clearly understood from the following detailed description taken in conjunction with the accompanying drawings, in which:
FIGS. 1 and 2 are typical views illustrating the shape of cutters of conventional cutting frames and a process for cutting a base material sheet using the respective cutting frames;
FIG. 3 is a view illustrating a method of manufacturing rectangular unit pieces according to a preferred embodiment of the present invention;
FIG. 4 is a typical view illustrating a cutting frame according to a preferred embodiment of the present invention, which is used to implement the manufacturing method according to the present invention;
FIG. 5 is a partial typical view illustrating an array structure of rectangular unit pieces corresponding to cutters of the cutting frame of FIG. 4;
FIG. 6 is a typical view illustrating an array structure of rectangular unit pieces having a predetermined size when the rectangular unit pieces are arranged on a specific cutting frame according to a conventional art;
FIGS. 7 and 8 are partial typical views illustrating embodiments of various array structures of rectangular unit pieces on the cutting frame according to the present invention under the same condition; and
FIG. 9 is a partial typical view illustrating an array structure of two kinds of rectangular unit pieces according to a preferred embodiment of the present invention when the rectangular unit pieces are arranged on the cutting frame.

### DETAILED DESCRIPTION OF PREFERRED EMBODIMENTS

Now, preferred embodiments of the present invention will be described in detail with reference to the accompanying drawings. It should be noted, however, that the scope of the present invention is not limited by the illustrated embodiments.

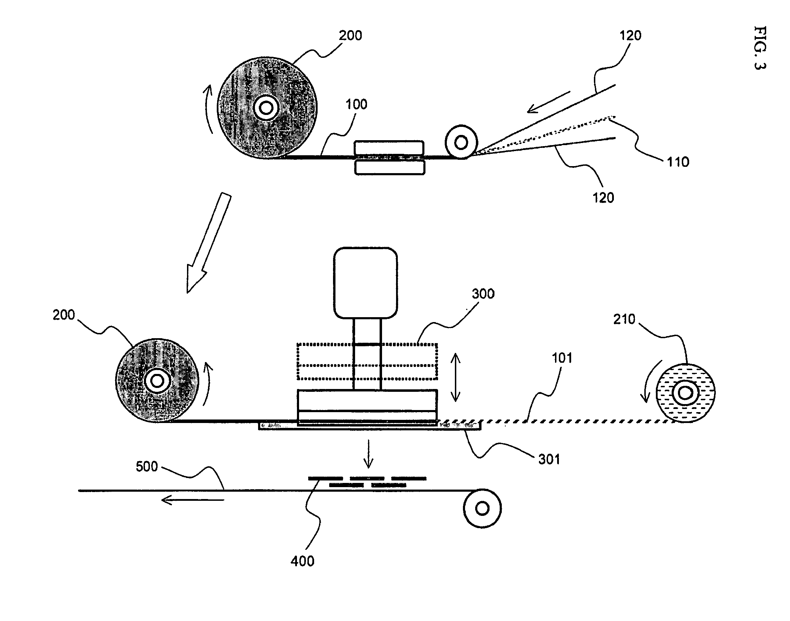

FIG. 3 is a view illustrating a method of manufacturing rectangular unit pieces according to a preferred embodiment of the present invention.

Referring to FIG. 3, the rectangular unit pieces 400 are manufactured through a process of manufacturing a base material sheet 100 of a laminate sheet structure and winding the base material sheet 100 on a feed roll 200, a process of continuously feeding the base material sheet 100 from the feed roll 200, a process of cutting the base material sheet 100 using a cutting frame 300 to manufacture a plurality of rectangular unit pieces 400, a process of continuously winding a scrap 101 on a winding roll 210, and transferring the rectangular unit pieces 400 to a predetermined position.

The base material sheet 100 is constructed in a laminate structure in which protective sheets 120 are attached to opposite major surfaces of a sheet 110 including a specific absorption or transmission layer, respectively.

The base material sheet 100, fed from the feed roll 200, maintains its continuous sheet shape, even after the base material sheet 100 is cut by the cutting frame 300. Consequently, the base material sheet 100 can be continuously wound on the winding roll 210 in the shape of the scrap 101, and therefore, the rectangular unit pieces manufacturing process is continuously carried out. Strictly speaking, since the base material sheet 100 does not move, during the cutting process of the cutting frame 300, the rectangular unit pieces manufacturing process is continuously carried out through intermittent stopping processes.

When the base material sheet 100 is transferred to a die 301, the cutting frame 300 is lowered, and the base material sheet 100 is cut by cutters (not shown) of the cutting frame 300. At this time, the rectangular unit pieces 400 drop below the die 301 and are then transferred to a predetermined position by a conveyor 500.

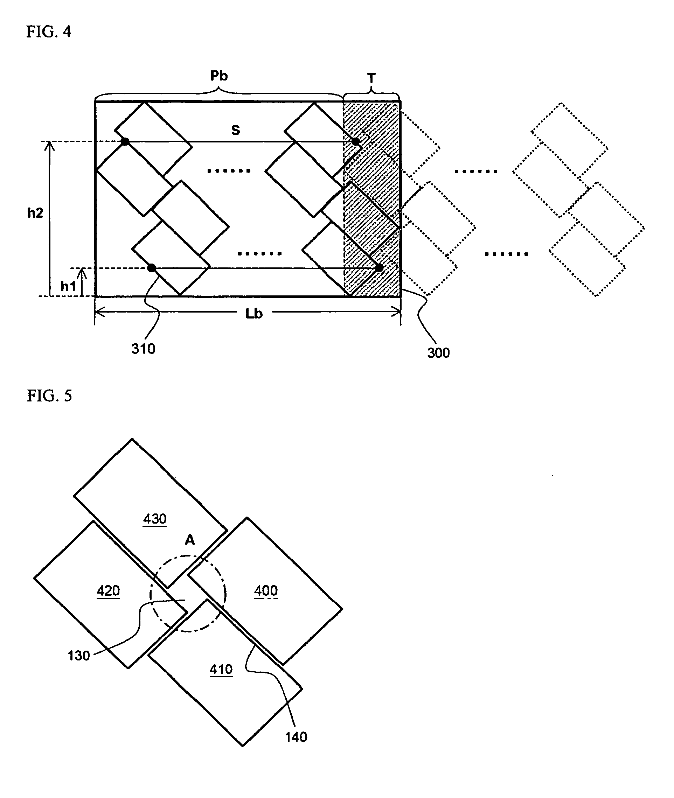

FIG. 4 is a typical view illustrating a cutting frame according to a preferred embodiment of the present invention, which is used to implement the manufacturing method according to the present invention. For convenience of description and simplicity of illustration, the array shape of the cutters for cutting one kind of rectangular unit pieces is illustrated in the form of a partial typical view.

Referring to FIG. 4, a plurality of cutters 310 are mounted or formed in the cutting frame 300. The cutters 310 cut rectangular unit pieces from a base material sheet (not shown) according to the array shape of the cutters 310.

The cutters 310 are arranged in a structure in which the cutters 310 engage with each other, when the left side end cutters are located successively after the right side end cutters, such that the left side end shape coincides with the right side end shape. In this array structure, a spacing distance S between the opposite side ends of the cutters in the longitudinal direction are equal to each other at arbitrary heights h1 and h2 from the lower end of the cutting frame 300.

Consequently, a pitch Pb, which is a distance for a one-time cutting process, is decided by the spacing distance S between the opposite side ends of the cutters at the arbitrary heights h1 and h2. This distance is shorter than the length Lb of the cutting frame 300. As a result, the overlapping region T corresponding to the region obtained by subtracting the pitch Pb from the length Lb of the cutting frame 300 can be used at a subsequent cutting process, and therefore, the cutting efficiency is improved as compared with the cutting frames shown in FIGS. 1 and 2.

FIG. 5 is a partial typical view illustrating an array structure of rectangular unit pieces corresponding to cutters of the cutting frame of FIG. 4.

Referring to FIG. 5, the rectangular unit pieces are arranged such that one rectangular unit piece 400 is adjacent to two rectangular unit pieces 410 and 430 but is not adjacent to one rectangular unit piece 420. In comparison with this array structure, one rectangular unit piece is in contact with six rectangular unit pieces in the array structure of the rectangular unit pieces as shown in FIG. 1, and one rectangular unit piece is in contact with five rectangular unit pieces in the array structure of the rectangular unit pieces as shown in FIG. 2. Consequently, some sides of the rectangular unit pieces are simultaneously in contact with two different rectangular unit pieces in the array structures of the rectangular unit pieces as shown in FIGS. 1 and 2. For reference, FIG. 5 illustrates only the two rectangular unit pieces 410 and 430 adjacent to the rectangular unit piece 400 but not the other two rectangular unit pieces for simplicity of illustration.

Also, the rectangular unit pieces are arranged such that an island-type residue 130 is formed among the adjacent four rectangular unit pieces 400, 410, 420, and 430 (see a circle drawn by an alternated long and short dash line). The island-type residue 130 is an approximately rectangular-shaped residue defined by the respective sides of the rectangular unit pieces. This structure is not seen from the array structures of FIGS. 1 and 2 at all.

In the array structure of the rectangular unit pieces as described above, the utilization of the base material sheet 100 is greater than that in FIG. 1. Preferably, the effective width W of the base material sheet 100 is substantially almost equal to the cutting width D.

Also, a cutting margin 140 having a size less than that of the island-type residue 110 is located between the rectangular unit pieces 400 and 410, which are adjacent to each other at one side of each rectangular unit piece. Consequently, when the rectangular unit pieces 400, 410, 420, and 430 are cut from the base material sheet 100, the respective rectangular unit pieces are effectively cut as independent unit pieces by the cutters of the cutting frame.

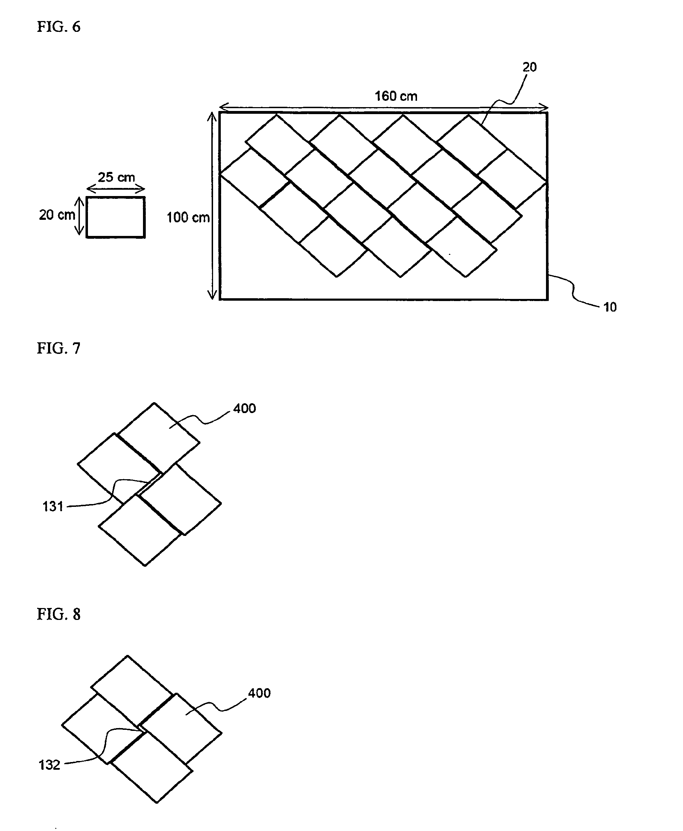

The fact that the cutting efficiency of the base material is improved by the array structure of the rectangular unit pieces on the cutting frame according to the present invention can be confirmed by FIGS. 6 to 8 and the following description with reference to the drawings.

FIG. 6 is a typical view illustrating an array structure of rectangular unit pieces having a predetermined size when the rectangular unit pieces are arranged on a specific cutting frame according to a conventional art, and FIGS. 7 and 8 are partial typical views illustrating embodiments of various array structures of rectangular unit pieces on the cutting frame according to the present invention under the same condition.

Referring first to FIG. 6, cutters corresponding to rectangular unit pieces 20 having a length of 25 cm and a width of 20 cm are arranged on a cutting frame 10 having a length of 160 cm and a width of 100 cm such that the cutters coincide with one another at the lateral side (single side) of each cutter, as shown in FIG. 1, while the cutters are inclined at an angle of 45 degrees.

According to the array structure 101 of the rectangular unit pieces, a total of 16 rectangular unit pieces 20 (to be exact, cutters corresponding to the rectangular unit pieces) are arranged on the cutting frame 10. The region where the rectangular unit pieces 20 are not arranged is disposed of as a scrap of a base material.

According to the array structure of the rectangular unit pieces as shown in FIG. 6, when a base material having an area of 100 m² (i.e., a length of 1000 cm and a width of 1000 cm) is cut, a total of 1372 rectangular unit pieces 20 are produced. That is, this array structure exhibits the productivity in which a total of 13.72 rectangular unit pieces 20 are produced from the base material having an area of 1 m². When the productivity is converted into the area rate, the productivity corresponds to the area rate of 63.41%. The base material corresponding to the remaining area rate of 36.59% is disposed of as a scrap of the base material.

On the other hand, the array structures of the rectangular unit pieces as shown in FIGS. 7 and 8 have something in common with each other in that island-type residues 131 and 132 are formed among four adjacent rectangular unit pieces 400. However, the island-type residues 131 and 132 have different shapes. Specifically, the island-type residue of FIG. 7 is formed in a rectangular shape having a length longer in one direction than the island-type residue of FIG. 8. This results from greater offset between the rectangular unit pieces 400 in the array structure of the rectangular unit pieces as shown in FIG. 7.

When a base material having the same size as that described in connection with FIG. 6 is cut based on the above-described array structures of the rectangular unit pieces, a total of 1521 rectangular unit pieces 400 are produced according to the array structure of the rectangular unit pieces as shown in FIG. 7, and a total of 1630 rectangular unit pieces 400 are produced according to the array structure of the rectangular unit pieces as shown in FIG. 8. When the productivity is converted into the area rate, the array structure of the rectangular unit pieces as shown in FIG. 7 has an area rate of 69.9%, and the array structure of the rectangular unit pieces as shown in FIG. 8 has an area rate of 74.88%. As a result, the cutting efficiencies of the array structure of the rectangular unit pieces as shown in FIG. 7 and the array structure of the rectangular unit pieces as shown in FIG. 8 are higher by 6.49% and 11.47% than that of the array structure 101 of the rectangular unit pieces as shown in FIG. 6.

Consequently, contrary to our expectations that the array structure shown in FIG. 6 in which the rectangular unit pieces are arranged such that the rectangular unit pieces are brought into tight contact with one another according to the conventional art exhibits the highest cutting efficiency, it is confirmed to our surprise that the offset array structures of FIGS. 7 and 8 exhibit higher cutting efficiencies. It is also confirmed that the cutting efficiency may vary depending upon the shape of the island-shaped residue.

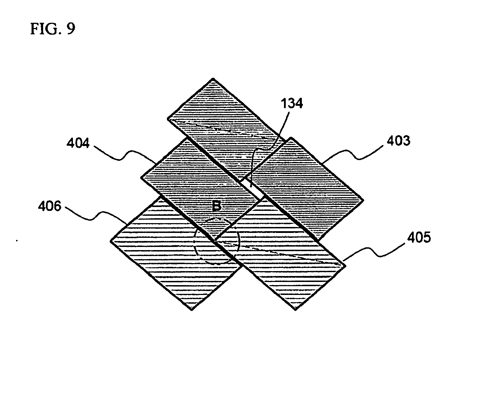

FIG. 9 is a partial typical view illustrating an array structure of two kinds of rectangular unit pieces according to a preferred embodiment of the present invention when the rectangular unit pieces are arranged on the cutting frame. The array structure of the rectangular unit pieces as shown in FIG. 9 exhibits higher cutting efficiency than the conventional array structure of the rectangular unit pieces in which the rectangular unit pieces are arranged such that the rectangular unit pieces coincide with one another at one side of each rectangular unit piece or such that the rectangular unit pieces are located on the same axis.

Referring to FIG. 9, there is partially illustrated an exemplary array structure 104 in which small-sized rectangular unit pieces 403 and 404 and large-sized rectangular unit pieces 405 and 406 which have a size ratio of 30:34 are arranged in a number ratio of 2:3. Here, the size ratio is set based on the diagonal lengths of the rectangular unit pieces 403, 404, 405, and 406.

Island-type residues 134 are included in the array structure including the small-sized rectangular unit pieces 403 and 404 and the large-sized rectangular unit pieces 405 and 406. Consequently, this array structure is different from the conventional array structure of the rectangular unit pieces.

According to the array structure of the rectangular unit pieces, no island-type residue may be formed at a specific region B at which some rectangular unit pieces 404, 405, and 406 are adjacent to one another. In the array structure of the rectangular unit pieces according to the present invention, however, the island-type residues 134 are necessarily included in the combination of at least some rectangular unit pieces.

Although the preferred embodiments of the present invention have been disclosed for illustrative purposes, those skilled in the art will appreciate that various modifications, additions and substitutions are possible, without departing from the scope of the invention as disclosed in the accompanying claims.

### INDUSTRIAL APPLICABILITY

As apparent from the above description, the cutting frame according to the present invention exhibits high cutting efficiency and excellent continuity of the working process through a specific working condition and a specific array structure of rectangular unit pieces when the rectangular unit pieces, of which the direction particularity is required according to the properties of a material, are to be cut from a base material sheet while the rectangular unit pieces are inclined to the base material sheet. In particular, when a large amount of rectangular unit pieces are produced through mass production, it is possible to greatly reduce the total manufacturing costs of the rectangular unit pieces based on the high cutting efficiency.

## Claims

1. A method of manufacturing one or more kinds of rectangular unit pieces (40) from a long base material sheet at an inclination angle of 20 to 70 degrees through a continuous cutting process using a cutting frame (10), the method comprising:
(a) manufacturing a base material sheet of a laminate structure having two or more stacked sheets and winding the base material sheet on a roll;
(b) continuously feeding the base material sheet, wound on the roll;
(c) cutting the fed base material sheet using a cutting frame (10) having cutters (20) mounted or formed therein in a structure in which the cutters (20) correspond to rectangular unit pieces (40) to be manufactured,
the cutters (20) being arranged such that the left side end shape of cutters (20) coincides with the right side end shape of cutters (20) when the left side end cutters (20) are located successively after the right side end cutters (20),
the cutting being carried out in a partial overlapping fashion while the base material sheet is partially overlapped such that a length ('pitch') for a one-time cutting process is equal to a spacing distance between the opposite side ends of the cutters (20) which are equal to each other at arbitrary heights from the lower end of the cutting frame (10), and
wherein a partially overlapping region of the base material in the cutting sheet corresponds to the region obtained by subtracting the pitch from the length of the cutting frame (10);
(d) winding a scrap, produced after the cutting of the rectangular unit pieces (40), on another roll; and
(e) transferring the cut rectangular unit pieces (40)
wherein, at the step (c), the cutters (20) are mounted or formed in the cutting frame (10) based on the array structure of the rectangular unit pieces (40) such that a large majority of the remaining rectangular unit pieces (40), excluding the uppermost row rectangular unit pieces (40) and the lowermost row rectangular unit pieces (40), are arranged while being adjacent to different rectangular unit pieces (40) at four sides of each rectangular unit piece, and at least some combinations of adjacent four rectangular unit pieces (40) form an island-type residue in the center thereof.

2. The method according to claim 1, wherein, at the step (a), the base material sheet is a sheet including layers that absorb or transmit only a specific-direction wave motion of light or an electromagnetic wave in the longitudinal direction or in the lateral direction, i.e., selective absorption/transmission layers.

3. The method according to claim 2, wherein each of the rectangular unit pieces (40), cut from the base material sheet at the step (c), is a relatively small-sized film of which the selective absorption/transmission layers are inclined at an inclination angle of 20 to 70 degrees.

4. The method according to claim 1, wherein each of the cutters (20) is a knife for cutting or a light source for cutting.

5. The method according to claim 4, wherein the knife for cutting is a metal knife or a jet water knife, and the light source for cutting is laser.

6. The method according to claim 1, wherein, at the step (c), the distances between the opposite side ends of the cutters (20) in the longitudinal direction are equal to each other at the respective heights of the cutting frame (10).

7. The method according to claim 1, wherein the number of the combinations of the rectangular unit pieces (40) forming the island-type residue is not less than 50% of the number of the remaining rectangular unit pieces (40) excluding the uppermost row rectangular unit pieces (40) and the lowermost row rectangular unit pieces (40).

8. The method according to claim 1, wherein a cutting margin having a size less than that of the island-type residue is formed at regions where the rectangular unit pieces (40) are adjacent to one another.

9. The method according to claim 1, wherein, at the step (d), the scrap includes a plurality of bores corresponding to the rectangular unit pieces (40) continuously connected to one another by a cutting margin, a large majority of the remaining rectangular unit piece bores, excluding the uppermost row rectangular unit piece bores and the lowermost row rectangular unit piece bores, are arranged while being adjacent to different rectangular unit piece bores at four sides thereof by a gap corresponding to the cutting margin, and at least some combinations of adjacent four rectangular unit piece bores form an island-type residue having a size greater than that of the cutting margin in the center thereof.

10. An apparatus for manufacturing one or more kinds of rectangular unit pieces (40) from a long base material sheet at an inclination angle of 20 to 70 degrees through a continuous cutting process, the apparatus comprising:
(i) a device for stacking two or more sheets to manufacture a base material sheet of a laminate structure;
(ii) a feed roll for feeding the base material sheet;
(iii) a cutting frame (10) including cutters (20) mounted or formed therein based on the array structure of the rectangular unit pieces (40) such that a large majority of the remaining rectangular unit pieces (40), excluding the uppermost row rectangular unit pieces (40) and the lowermost row rectangular unit pieces (40), are arranged while being adjacent to different rectangular unit pieces (40) at four sides of each rectangular unit piece, and at least some combinations of adjacent four rectangular unit pieces (40) form an island-type residue in the center thereof;
(iv) a winding roll for winding a scrap produced after the cutting of the rectangular unit pieces (40); and
(v) a conveyor for transferring the cut rectangular unit pieces (40).

## Patentansprüche

1. Verfahren zum Herstellen von einer Art oder mehrerer Arten von Rechteckeinheitsteilen (40) aus einem langen Basismaterialbogen bei einem Neigungswinkel von 20 bis 70° durch einen stetigen Schneidprozess unter Verwendung eines Schneidrahmens (10), wobei das Verfahren umfasst:
(a) Herstellen eines Basismaterialbogens mit einem Laminataufbau, der zwei oder mehr geschichtete Bögen aufweist, und Wickeln des Basismaterialbogens auf eine Rolle;
(b) stetiges Zuführen des Basismaterialbogens, welcher auf der Rolle aufgewickelt ist;
(c) Schneiden des zugeführten Basismaterialbogens durch Verwenden des Schneidrahmens (10), der Schneiden (20) aufweist, die darin in einer Struktur angebracht oder ausgebildet sind, in welcher die Schneiden (20) herzustellenden, rechteckigen Einheitsteilen (40) entsprechen,
wobei die Schneiden (20) so angeordnet sind, dass sich die linksseitige Endform der Schneiden (20) mit der rechtseitigen Endform der Schneiden (20) deckt, wenn die linksseitigen Endschneiden (20) der Reihe nach hinter den rechtseitigen Endschneiden (20) angeordnet sind,
das Schneiden in einer teilweise überlappenden Form ausgeführt wird, während der Basismaterialbogen teilweise so überlappt ist, dass eine Länge (Abstand) für einen einmaligen Schneidvorgang identisch mit einem Abstandsmaß zwischen den gegenüberliegenden Enden der Schneiden (20) ist, welche identisch zueinander an beliebigen Höhen von dem unteren Ende des Schneidrahmens (10) sind, und
wobei eine teilweise Überlappungsregion des Basismaterials in dem Schneidbogen der Region entspricht, welche durch Abziehen des Abstandes von der Länge des Schneidrahmens (10) erhalten wird;
(d) Wickeln eines Restes, welcher nach dem Schneiden der rechteckigen Einheitsteile (40) generiert wird, auf eine andere Rolle; und
(e) Versetzen der geschnittenen rechteckigen Einheitsteile (40),
wobei, in dem Schritt (c), die Schneiden (20) in dem Schneidrahmen (10), welcher auf der Anordnungsstruktur der rechteckigen Einheitsteile (40) basiert, so angebracht oder ausgebildet sind, dass eine große Mehrheit der überbleibenden rechteckigen Einheitsteile (40), mit Ausnahme der obersten Reihe von rechteckigen Einheitsteilen (40) und der untersten Reihe von rechteckigen Einheitsteilen (40), an vier Seiten von jedem rechteckigen Einheitsteil angeordnet sind, während sie benachbart zu verschiedenen rechteckigen Einheitsteilen (40) sind, und zumindest einige Kombinationen von vier benachbarten rechteckigen Einheitsteilen (40) einen inselähnlichen Rest in der Mitte davon ausfbilden.

2. Verfahren nach Anspruch 1, bei welchem in dem Schritt (a) der Basismaterialbogen ein Bogen mit Schichten ist, welche nur eine spezifische Wellenbewegungsrichtung von Licht oder einer elektromagnetischen Welle in der Längsrichtung oder in der Querrichtung absorbieren oder durchlassen, das heißt, selektive Absorptions-/Transmissionsschichten.

3. Verfahren nach Anspruch 2, bei welchem jedes der rechteckigen Einheitsteile (40), die aus dem Basismaterialbogen in dem Schritt (c) geschnitten wurden, eine relativ kleine dünne Schicht ist, deren selektive Absorptions-/Transmissionsschichten mit einem Neigungswinkel von 20 bis 70° geneigt sind.

4. Verfahren nach Anspruch 1, bei welchem jede der Schneiden (20) ein Messer zum Schneiden oder eine Lichtquelle zum Schneiden ist.

5. Verfahren nach Anspruch 4, bei welchem das Messer zum Schneiden ein Metallmesser oder ein Wasserstrahlmesser, und die Lichtquelle zum Schneiden ein Laser ist.

6. Verfahren nach Anspruch 1, bei welchem in Schritt (c) die Abstände zwischen den gegenüberliegenden Seitenden der Schneiden (20) in der Längsrichtung identisch zueinander an den entsprechenden Höhen des Schneidrahmens (10) sind.

7. Verfahren nach Anspruch 1, bei welchem die Anzahl von Kombinationen von rechteckigen Einheitsteilen (20), welche die inselähnlichen Reste ausbilden, nicht weniger als 50 % der Anzahl von überbleibenden rechteckigen Einheitsteilen (40), mit Ausnahme der obersten Reihe von rechteckigen Einheitsteilen (40) und der untersten Reihe von rechteckigen Einheitsteilen (40), ist.

8. Verfahren nach Anspruch 1, bei welchem ein Schneidrand mit einer Größe, die geringer als die des inselförmigen Restes ist, in Regionen, wo die rechteckigen Einheitsteile (40) benachbart zueinander sind, ausgebildet wird.

9. Verfahren nach Anspruch 1, bei welchem in Schritt (d) der Rest eine Vielzahl von Löchern aufweist, die den rechteckigen Einheitsteilen (40), welche stetig miteinander durch einen Schneidrand verbunden sind, entsprechen, wobei eine große Mehrheit der überbleibenden rechteckigen Einheitsteillöcher, mit Ausnahme der obersten Reihe rechteckiger Einheitsteillöcher und der untersten Reihe rechteckiger Einheitsteillöcher, an vier Seiten davon durch einen Spalt, welcher dem Schneidrand entspricht, angeordnet sind, während diese benachbart zu verschiedenen rechteckigen Einheitsteillöchern sind, und zumindest einige Kombinationen von vier benachbarten rechteckigen Einheitsteillöcher einen inselartigen Rest mit einer Größe, welche größer als die des Schneidrandes ist, in der Mitte davon ausbilden.

10. Vorrichtung zum Herstellen von einer Art oder mehrerer Arten von rechteckigen Einheitsteilen (40) aus einem langen Basismaterialbogen bei einem Neigungswinkel von 20 bis 70° durch einen stetigen Schneidprozess, wobei die Vorrichtung aufweist:
(i) eine Einrichtung zum Stapeln von zwei oder mehr Bögen, um einen Basismaterialbogen mit einer Laminatstruktur auszubilden;
(ii) eine Zuführrolle zum Zuführen des Basismaterialbogens;
(iii) einen Schneidrahmen (10) mit Schneiden (20), welche darin basierend auf die Aufbaustruktur der rechteckigen Einheitsteile (40) so angebracht oder ausgebildet sind, dass eine große Mehrheit der überbleibenden rechteckigen Einheitsteile (40), mit Ausnahme der obersten Reihe rechteckiger Einheitsteile (40) und der untersten Reihe rechteckiger Einheitsteile (40), an vier Seiten von jedem rechteckigen Einheitsteil angeordnet sind, während diese benachbart zu verschiedenen rechteckigen Einheitsteilen (40) sind, und zumindest einige Kombinationen der vier benachbarten rechteckigen Einheitsteile (40) einen inselartigen Rest in der Mitte davon ausbilden;
(iv) eine Wicklungsrolle zum Aufwickeln eines Restes, welcher nach dem Schneiden der rechteckigen Einheitsteile (40) generiert wird; und
(v) einem Beförderungsmittel zum Versetzen der geschnittenen rechteckigen Einheitsteile (40).

## Revendications

1. Procédé de fabrication d'une ou plusieurs sortes de pièces unitaires rectangulaires (40) à partir d'une longue feuille de matière de base à un angle d'inclinaison de 20 à 70 degrés par un processus de coupe continue en utilisant un châssis de coupe (10), le procédé comprenant :
(a) la fabrication d'une feuille de matière de base d'une structure stratifiée ayant deux ou plusieurs feuilles empilées et l'enroulement de la feuille de matière de base sur un rouleau ;
(b) l'amenée continue de la feuille de matière de base, enroulée sur le rouleau ;
(c) la coupe de la feuille de matière de base amenée en utilisant un châssis de coupe (10) ayant des dispositifs de coupe (20) montés ou formés en son sein dans une structure dans laquelle les dispositifs de coupe (20) correspondent à des pièces unitaires rectangulaires (40) à fabriquer,
les dispositifs de coupe (20) étant agencés de sorte que la forme d'extrémité côté gauche des dispositifs de coupe (20) coïncide avec la forme d'extrémité côté droit des dispositifs de coupe (20) lorsque les dispositifs de coupe d'extrémité côté gauche (20) sont situés successivement après les dispositifs de coupe d'extrémité côté droit (20),
la coupe étant effectuée dans un chevauchement partiel tandis que la feuille de matière de base est partiellement chevauchée de sorte qu'une longueur (« intervalle ») pour un processus de coupe unique est égale à une distance d'espacement entre les extrémités latérales opposées des dispositifs de coupe (20) qui sont égales l'une à l'autre à des hauteurs arbitraires par rapport à l'extrémité inférieure du châssis de coupe (10), et
dans lequel une région partiellement à chevauchement de la matière de base dans la feuille de coupe correspond à la région obtenue en soustrayant de la longueur du châssis de coupe (10) l'intervalle ;
(d) l'enroulement d'un copeau, produit après la coupe des pièces unitaires rectangulaires (40), sur un autre rouleau ; et
(e) le transfert des pièces unitaires rectangulaires coupées (40)
dans lequel, à l'étape (c), les dispositifs de coupe (20) sont montés ou formés dans le châssis de coupe (10) en se basant sur la structure matricielle des pièces unitaires rectangulaires (40) de sorte qu'une grande majorité des pièces unitaires rectangulaires restantes (40), en excluant la rangée supérieure des pièces unitaires rectangulaires (40) et la rangée inférieure des pièces unitaires rectangulaires (40), sont agencées tout en étant adjacentes à des pièces unitaires rectangulaires différentes (40) au niveau des quatre côtés de chaque pièce unitaire rectangulaire, et au moins certaines combinaisons de quatre pièces unitaires rectangulaires adjacentes (40) forment un résidu de type îlot au centre de celles-ci.

2. Procédé selon la revendication 1, dans lequel, à l'étape (a), la feuille de matière de base est une feuille incluant des couches qui absorbent ou transmettent seulement un mouvement ondulatoire de lumière de direction spécifique ou une onde électromagnétique dans la direction longitudinale ou dans la direction latérale, c'est-à-dire, des couches d'absorption / transmission sélectives.

3. Procédé selon la revendication 2, dans lequel chacune des pièces unitaires rectangulaires (40), coupées à partir de la feuille de matière de base à l'étape (c), est un film de relativement petite taille dont les couches d'absorption / transmission sélectives sont inclinées à un angle d'inclinaison de 20 à 70 degrés.

4. Procédé selon la revendication 1, dans lequel chacun des dispositifs de coupe (20) est un couteau pour couper ou une source de lumière pour couper.

5. Procédé selon la revendication 4, dans lequel le couteau pour couper est un couteau métallique ou un couteau à jet d'eau, et la source de lumière pour couper est un laser.

6. Procédé selon la revendication 1, dans lequel, à l'étape (c), les distances entre les extrémités latérales opposées des dispositifs de coupe (20) dans la direction longitudinale sont égales l'une à l'autre au niveau des hauteurs respectives du châssis de coupe (10).

7. Procédé selon la revendication 1, dans lequel le nombre des combinaisons des pièces unitaires rectangulaires (40) formant le résidu de type îlot n'est pas inférieur à 50 % du nombre des pièces unitaires rectangulaires restantes (40) en excluant la rangée supérieure des pièces unitaires rectangulaires (40) et la rangée inférieure des pièces unitaires rectangulaires (40).

8. Procédé selon la revendication 1, dans lequel une marge de coupe ayant une taille inférieure à celle du résidu de type îlot est formée au niveau de régions où les pièces unitaires rectangulaires (40) sont adjacentes les unes aux autres.

9. Procédé selon la revendication 1, dans lequel, à l'étape (d), le copeau inclut une pluralité d'alésages correspondant aux pièces unitaires rectangulaires (40) reliées en continu les unes aux autres par une marge de coupe, une grande majorité des alésages de pièce unitaire rectangulaire restants, en excluant la rangée supérieure d'alésages de pièce unitaire rectangulaire et la rangée inférieure d'alésages de pièce unitaire rectangulaire, sont agencés tout en étant adjacents à des alésages de pièce unitaire rectangulaire différents au niveau des quatre côtés de cette dernière par un espacement correspondant à la marge de coupe, et au moins certaines combinaisons de quatre alésages de pièce unitaire rectangulaire adjacents forment un résidu de type îlot ayant une taille plus grande que celle de la marge de coupe dans le centre de cette dernière.

10. Appareil pour fabriquer une ou plusieurs sortes de pièces unitaires rectangulaires (40) à partir d'une longue feuille de matière de base à un angle d'inclinaison de 20 à 70 degrés par un processus de coupe continu, l'appareil comprenant :
(i) un dispositif pour empiler deux ou plusieurs feuilles pour fabriquer une feuille de matière de base d'une structure stratifiée ;
(ii) un rouleau d'alimentation pour amener la feuille de matière de base ;
(iii) un châssis de coupe (10) incluant des dispositifs de coupe (20) montés ou formés en son sein en se basant sur la structure matricielle des pièces unitaires rectangulaires (40) de sorte qu'une grande majorité des pièces unitaires rectangulaires restantes (40), en excluant la rangée supérieure des pièces unitaires rectangulaires (40) et la rangée inférieure des pièces unitaires rectangulaires (40), sont agencées tout en étant adjacentes aux pièces unitaires rectangulaires différentes (40) au niveau des quatre côtés de chaque pièce unitaire rectangulaire, et au moins certaines combinaisons de quatre pièces unitaires rectangulaires adjacentes (40) se forment en un résidu de type îlot dans le centre de celles-ci ;
(iv) un rouleau d'enroulement pour enrouler un copeau produit après la coupe des pièces unitaires rectangulaires (40) ; et
(v) un transporteur pour transférer les pièces unitaires rectangulaires coupées (40).
